# EUROPEAN PATENT APPLICATION

(11) **EP 4 464 680 A1**
(43) Date of publication of application: **20.11.2024**
(21) Application number: 23290017.5
(22) Date of filing: 16.05.2023
(51) Int. Cl.: C04B 28/14, C04B 28/16, C04B 28/08

(54) **METHOD FOR BACKFILLING IN MINES, BINDER COMPOSITION FOR SAID METHOD AND THE USE THEREOF**

(71) Applicant: Holcim Technology Ltd, 5113 Holderbank (CH)
(72) Inventor: Brouard, Eric, 38300 Meyrié (FR); Giacometti, Tifenn, 69008 Lyon (FR); Creyx, Antoine, 38090 Villefontaine (FR)
(74) Representative: WSL Patentanwälte Partnerschaft mbB

(57) **Abstract**

The invention relates to a method for backfilling in underground and surface mining characterised in that the Tailings are mixed with a binder wherein the binder comprises at least granulated blast furnace slag, Portland cement clinker and calcium sulfate wherein the amount of portland cement clinker ranges from 5 m.-% to 12m.-% and the amount of calcium sulfate ranges from 5 m.-% to 15 m.-% the rest being ground granulated blast furnace slag as well as a binder for the method and the use of the binder.

## Description

The invention relates to a method for backfilling in mines, a binder composition for said method as well as the use of said composition.

In general backfilling is applied in ore mining. Ore is natural rock or sediment that contains one or more valuable minerals concentrated above background levels. Typically ores are containing metals, that can be mined, treated and sold at a profit. The grade of ore refers to the concentration of the desired material it contains.

Minerals of interest are generally oxides, sulfides, silicates, or native metals such as copper or gold. Ore bodies are formed by a variety of geological processes generally referred to as ore genesis, and can be classified based on their deposit type. Ore is extracted from the earth through mining and treated or refined, to extract the valuable metals or minerals.

In most cases, an ore does not consist entirely of a single ore mineral but it is mixed with other valuable minerals and with unwanted or valueless rocks and minerals. The part of an ore that is not economically desirable and that cannot be avoided in mining is known as gangue. The valuable ore minerals are separated from the gangue minerals by froth flotation, gravity concentration, electric or magnetic methods, and other operations known collectively as mineral processing or ore dressing.

Mineral processing consists of first liberation, to free the ore from the gangue, and concentration to separate the desired mineral(s) from it. Once processed, the gangue is known as tailings, which are useless but potentially harmful materials produced in great quantity, especially from lower grade deposits.

In mining, tailings are therefore the materials left over after the process of separating the valuable fraction from the uneconomic fraction (gangue) of an ore. Tailings are different from overburden, which is the waste rock or other material that overlies an ore or mineral body and is displaced during mining without being processed.

Mining with backfill is a requirement in the industry, especially in underground mining, as it is an important aspect of many mining methods and is a solution to many rock stability issues. When a mine plans to use backfill there are a number of considerations to be made with regards to type of fill, delivery systems and from where the fill will be obtained. Furthermore, the application of fill will result in additional infrastructure above and underground which will ultimately lead to an overall increase in operation costs.

Mine backfill is defined as the material used to fill the cavities (i.e., stopes) created by underground mining. Backfilling can be a means to dispose of sludge and/ or tailings which may contain hazardous materials and to reduce surface environmental impacts by storing tailings underground.

Most backfill materials are made of tailings, included sometimes sand, aggregates and / or crushed rock. Hydraulic cement is commonly added to provide structural strength.

Slag-rich binders are known to serve as binders for underground backfill materials for mining. Their high slag content makes them less sensitive to sulfates or acids generated by some components of backfill materials.

Activated super sulfated cement or super sulfated slag cement (both terms are commonly used) has been well known for a very long time to make concrete and mortar. For the sake of consistency the term super sulfated cement is used below.

Nowadays, activated super sulfated cements are becoming more and more attractive, as they have a comparable low carbon footprint. Super sulfated cement, its composition, specifications and conformity criteria are standardised in EN15743.

The standard itself makes reference to the standard EN196-1 to 9 relating to methods of testing cement and to EN197-1 relating to composition, specification and confirmative criteria for common cement.

According to standard EN15743, supersulfated cement is a hydraulic binder, i.e. finely ground inorganic material which, when mixed with water, forms a paste which sets and hardens by means of hydration reactions and processes. After hardening, supersulfated cement retains its strength and stability even under water.

Supersulfated cement consists mainly of granulated blast furnace slag and calcium sulfate. Their statistically homogenous composition results from quality assured production and material handling processes. In supersulfated cement, in contrast to common cement according to EN197-1, ground granulated blast furnace slag is mainly activated by calcium sulfate. In order to accelerate the activation and early hydration of slag, additional constituents may be added.

According to EN15743 a supersulfated cement consists of at least 75% GGBFS and 5% to 20% Calclumsulfate as main constituents and 0% to 5% Portland Cement clinker as a possible additional constituent.

Granulated blast furnace slag is made by rapid cooling of a slag melt of suitable composition as obtained by smelting iron ore in a blast furnace. Granulated blast furnace slag consists of at least 2/3 by mass of glassy phase and possesses hydraulic properties when suitably activated.

Granulated blast furnace slag may consist of at least 66 wt. % of a combination of calcium oxide (CaO), magnesium oxide (MgO) and silicon dioxide (SiO₂). The remainder contains aluminium oxide (Al₂O₃), together with small amounts of other compounds. The ratio by mass (CaO + MgO) /(SiO₂) may exceed 1.0.

Calcium sulfates exist in different modifications, such as gypsum, calcium sulfate dihydrate (CaSO₄ · 2H₂O), hemihydrate (CaSO₄ · ½ H₂O), or anhydrite (anhydrous calcium sulfate, CaSO₄) or any mixture thereof. Gypsum and anhydrite are found naturally, calcium sulfates are also available as a by-product of certain industrial processes.

As additional constituents in the super sulfated cement, especially for activating the super sulfated cement, portland cement clinker can be present. Portland cement clinker is a hydraulic material which may comprise at least 2/3 by mass of calcium silicates (3CaO · SiO₂) and (2CaO · SiO₂). The remainder of Portland cement clinker may comprise aluminium and iron containing clinker phases and other compounds. The weight ratio of (CaO) / (SiO₂) may be not less than 2.0. The content of magnesium oxide (MgO) may not exceed 5,0 wt.% .

"Hydration mechanisms of super sulphated slag cement", A. Gruskovnjak et. al., in "Cement and Concrete Research 38" (2008), p. 983 - 992) describes hydration and strength evolution of super sulfated cements produced by the activation of two different ground granulated blast furnace slags with anhydrite and small amounts of alkaline activator. It was found that there is an "advancement" of the amount of hydrates of a slag with low reactivity by adding aluminium sulfate and calcium hydroxide, which increased the amount of ettringite. Nevertheless, the early compressive strength was not increased but late strength showed a slow increase. It is concluded that the early compressive strength of a supersulfated cement (SSC) using low reactive slag cannot be overcome by adding stoichiometric amounts of constituents which are used for the formation of a specific hydration product.

AU 200168775 A1 describes a hydraulic binder containing a glassy bulky slag milled to a fineness of above 5000 cm²/g Blaine. The latently hydraulic blast furnace slag has a glassiness above 93 %, contains 34 % to 40 % SiO₂, 34 % to 37 % CaO and above 9% and preferably below 13% Al₂O₃. The (CaO + MgO) / (Al₂O₃ + SiOz) weight ratio should range from 0,88 - 0,98. The binder contains 0,5 - 5 % Portland cement clinker or Portland cement. In this document, the activation of the slag is affected by additional mixing or milling natural calcium sulfate (natural gypsum), flue gas desulfurized gypsum (or its anhydrite) in an amount of 12% to 20% by weight, Portland cement in an amount of 0,5% to 5 % by weight and/or other calcium oxides like hot dust, burnt lime or Ca(OH)₂ in an amount of 0,5% to 3 % by weight, alkali sulfates or alkali carbonates in amounts up to 3 % by weight and/or calcium salts of carboxylic acids in amounts of 0,5% to 3% by weight with the slag. However, the use of hot dust obtained from flue or kiln gases is preferred.

US 6,409,819 B1 describes an activated supersulfated aluminosilicate binder containing alumosilicates, calcium sulfate and an activator containing alkali metal salts, wherein the alumosilicates are selected from the group consisting of blast furnace slag, clay, marl and industrial by-products such as fly ash with the proviso that the Al₂O₃ content is greater than 5% by weight. Blast furnace slag is present in an amount exceeding 35% by weight and clay, marl and/or fly ash is present in an amount exceeding 5% by weight. Cement kiln dust in an amount from 3 to 10% by weight is added to the mixture as an activator and calcium sulfate is used in an amount exceeding 5% by weight.

CN 107827379A relates to a high-bending strength supersulfate cement. It addresses the problem of slow hydration and low early strength due to the inability of known activators to sufficiently stimulate the activity of granulated blast furnace slag. In order to achieve the object a high-breakage-resistant supersulfate cement should include as raw materials granulated blast furnace slag, gypsum, and high belite sulphoaluminate cement clinker. Further, 0.05% to 3% of an optional mineral excitation component can be present wherein preferably, the mineral excitation component includes any one or a combination of at least two of Portland cement, Portland cement clinker, ettringite type expansion agent, calcium oxide type expansion agent, steel slag, or carbide slag. Further as a procoagulant promoting component optionally can be present which includes lithium hydroxide, lithium chloride, lithium carbonate, lithium sulfate, lithium silicate, sodium hydroxide, potassium hydroxide, calcium hydroxide, calcium oxide, sodium sulfate, potassium sulfate. Any one or combination of at least two of aluminum sulfate, sodium carbonate, sodium carbonate, sodium bicarbonate, potassium carbonate, potassium bicarbonate, sodium chloride, or sodium silicate.

CN108083671A pertains to the respective granulated blast furnace slag exciting agent.

KR101581905B1 relates to an eco-friendly non-cement quick hardening binder composition.

It is an object of the present invention to provide a method for backfilling in mining with enhanced strength and higher stability.

The object is achieved by way of a method with the features of claim 1.

Further improvements and advantageous embodiments are claimed in the claims which are dependent from claim 1.

It is a further object of the invention to provide a binder for the use in the backfilling method.

The object is achieved by way of the features of claim 8, advantageous embodiments are claimed in the claims which are dependent from claim 8.

According to the invention Tailings are backfilled to a mine and bound with a specialised mineral binder adopted to the needs of the backfilling which is capable of developing sufficient strength and durability in a sulfate rich and acidic environment.

In general supersulfated cement is already standardized in some countries but for concrete and not for binding tailings. The main difference between common supersulfated cements and the binder in the present invention is that the amount of CaO, calcium sulfate and Portland cement clinker used is higher than that of known supersulfated cements.

The advantages in comparison to known binders in backfilling are a lower CO₂ footprint, better mechanical properties of the backfill materials and better durability of backfill materials.

Thus, the invention relates to a method for backfilling in underground and surface mining wherein Tailings are mixed with a binder wherein the binder comprises at least granulated blast furnace slag, Portland cement clinker and calcium sulfate wherein the amount of portland cement clinker ranges from 5 m.-% to 12 m.-% and the amount of calcium sulfate ranges from 5 m.-% to 15 m.-% the rest being ground granulated blast furnace slag. In the present description, mass percentages are written as m.-%.

In an embodiment Calcium sulfate is used which contains one, more or all from the following group: gypsum, calcium sulfate dihydrate (CaSO₄ · 2H₂O), hemihydrate (CaSO₄ · ½ H₂O), anhydrite (anhydrous calcium sulfate, CaSO₄) in any proportions. By this way the solubility in the mixed binder and reactivity of the ready mixed binder can be controlled.

In an embodiment the constituents of the binder are used in a ground form wherein they are ground separately or ground together.

In an embodiment the combined Blaine fineness of the binder is not below 2500 g/m2 and preferentially not below 3500 g/m2.

In an embodiment the Portland cement clinker can be any Portland cement clinker or any Portland cement, which is a ready ground material which is made from Portland cement clinker and additives wherein in case portland cement is used any strength class from 32.5, 42.5 and 52.5 can be used.

In an embodiment gangue or other aggregates are added.

In an embodiment the pulp density (mass of solid fraction for the backfill divided by the total mass of the backfill material) is adjusted to 55 to 82%.

In an embodiment 1 m.-% to 14 m.-% of the binder are mixed with tailings or tailings and other solid aggregates like gangue, sand, rock.

In an embodiment the binder or the backfilling material are mixed with further additives from the following group: setting retardants, setting accelerators, plasticizers.

Another aspect of the invention pertains to a binder for the binding of backfilling material in underground mining the binder comprising portland cement clinker from 5 m.-% to 12m.-% and calcium sulfate from 5 m.-% to 15 m.-% the rest being ground granulated blast furnace slag in an amount of 73 m.-% to 90 m.-% and other constituents.

In an embodiment the binder comprises further additives from the following group: setting retardants, setting accelerators, plasticizers.

In an embodiment the binder has a fineness of at least 2500 g/m2 Blaine.

In an embodiment the binder has a fineness of at least 3500 g/m2 Blaine.

In an embodiment the Portland cement clinker can be any Portland cement clinker or any ready ground Portland cement which is made from Portland cement clinker and additives wherein in case portland cement is used any strength class from 32.5, 42.5 and 52.5 or any mixture thereof is used.

In an embodiment the Calcium sulfate contains one, more or all from the following group: gypsum, calcium sulfate dihydrate (CaSO₄ · 2H₂O), hemihydrate (CaSO₄ · ½ H₂O), anhydrite (anhydrous calcium sulfate, CaSO₄) in any proportions .

Another aspect of the invention relates to the use of the aforementioned binder for binding backfilling material in underground and surface mining.

The invention is explained by examples and the accompanied drawing showing:
- Figure 1:: a diagram of the system GGBFS, Portland cement clinker and Gypsum;
- Figure 2:: a table showing a first example of the invention with comparative example;
- Figure 3:: a table showing a second example of the invention with comparative example;
- Figure 4:: a table showing a third example of the invention with comparative example;
- Figure 5:: a table showing a fourth example of the invention with comparative example;
- Figure 6:: a table showing a fifth example of the invention with comparative example;
- Figure 7: a table showing a sixth example of the invention with comparative example;
- Figure 8:: a table showing a seventh example of the invention with comparative example.

If not mentioned otherwise percentages are given in mass percent (m.-%).

As mentioned above the method according to the invention consists of mixing the tailings from the ore processing with an adopted binder.

The binder includes ground granulated blast furnace slag (GGBFS), a sulfate carrier (CS) and Portland cement clinker (PC).

The GGBFS can be any of a common GGBFS. The CS may be any Calcium sulfate for example gypsum, calcium sulfate dihydrate (CaSO₄ · 2H₂O), hemihydrate (CaSO₄ · ½ H₂O), or anhydrite (anhydrous calcium sulfate, CaSO₄) or any mixture thereof.

The PC can be any PC or any Portland cement, which is a ready ground material which is made from PC and additives. In the latter case it can be any strength class from 32.5, 42.5 and 52.5.

The constituents can be used in a ground form each ore can be ground together. In any way the combined Blaine fineness of the binder should have a Blaine fineness not below 2500 g/m2 and preferentially not below 3500 g/m2.

The fineness of the Tailings may vary but typically the fraction below 20 µm is around 50% or more.

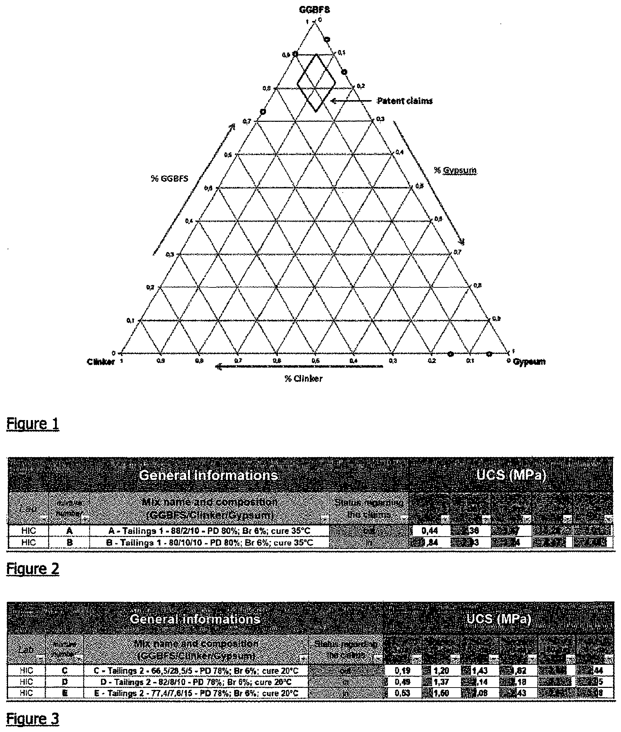

The main constituents according to the invention and the ranges of their content in the binder is given in Figure 1. As it can be seen GGBFS as the main constituent is present in 73 m.-% to 90 m.-%.

The sulfate carrier is present in 5 m.-% to 15 m.-% calculated as Calciumsulfate. Clinker is present in 5 m.-% to 12 m.-%. In case Portland cement is used it is calculated on the pure clinker constituents without additives.

In the method the Tailing is mixed with 1 m.-% to 14 m.-% of the binder wherein water may be added to a pulp density (solid fraction/total backfill material) adjusted to 55 to 82%. The Tailings may be used in a wet state. In this case the water content while mixing is adjusted to the desired level to the higher by adding water. It is adjusted to the lower by adding dryer Tailing or other aggregates which are present due to the ore processing.

The invention is explained by further examples.

### Example1: Tailings 6% binder, samples cured at 35°C (Figure 2)

In example A and B, for the same GGBFS and gypsum content, the B mixture with 10% clinker according to the invention performs far better than the comparative Example A with only 2% at 3 and 7 days which is of course important for backfilling. The content of the overall Binder is 6 m.-% of the total weight of the backfill material.

### Example 2: Tailings 6% binder samples cured at 20°C (Figure 3)

In this second example, mixtures C,D and E are compared. Mixture C has a binder with a comparatively high clinker content of 28,5 m.-%. Mixtures D and E with lower clinker content of respectively 8 and 7,6% perform surprisingly better than mixture C at all ages. Again the binder content is 6 m.-% of the overall mixture.

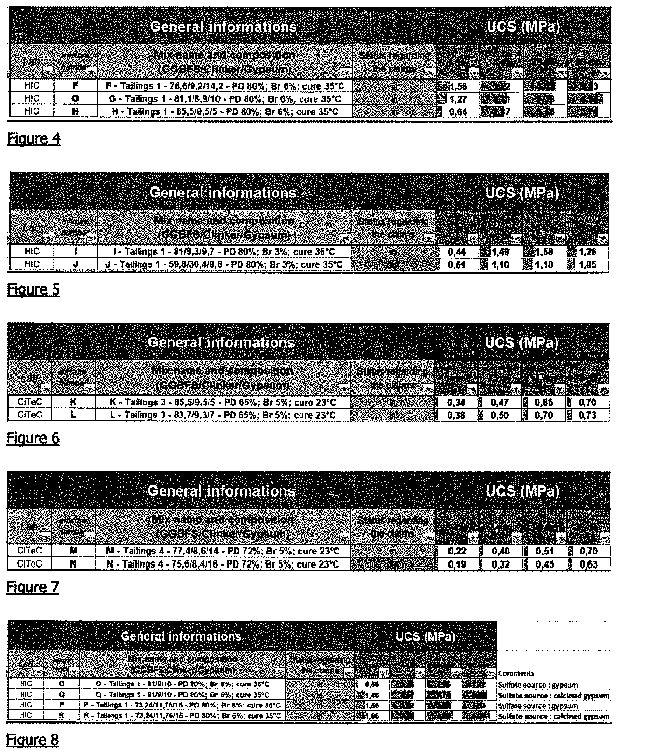

### Example 3 : Tailings, 6% binder, samples cured at 35°C (Figure 4)

In this third example it can be derived that the higher the gypsum content is, the better the strengths at early ages are. However, late strengths can be impacted. Optimum gypsum content must be found by balancing early and late mechanical strengths. Nevertheless a high gypsum content can be useful in case a fast strength at early ages is needed. Further this can be controlled by a mixture of Calcium sulfates with different solubilities i.e., the partial use of anhydrite.

### Example 4 : Tailings 3% binder, samples cured at 35°C (Figure 5)

In this fourth example the binder content is reduced to 3 m.-%. The gypsum content is around 10 m.-%. Surprisingly mixture I which is according to the invention with 81 m.-% slag and only 10 m.-% clinker performs better than comparative mixture 3 with 30 m.-% clinker.

### Example 5 : Tailings, 5% binder, samples cured at 23°C (Figure 6)

From the fifth example it can be seen that in both mixtures according to the invention mixture L with 7 m.-% gypsum performs slightly better than mixture K with 5 m.-% gypsum. The clinker content is with 9,5 m.-% within the range of the invention.

### Example 6 : Tailings 4 - 5% binder, samples cured at 23°C (Figure 7)

In this fifth example the upper limit of the gypsum content in the invention is illustrated. , mixture M according to the invention with 14% gypsum shows a better performance with regard to the strength development than comparative mixture N with 16 m.-% gypsum which is not within the invention. Mixture M is very close to the optimum upper calcium sulfate content.

### Example 7 : Tailings 1 - 6% binder, samples cured at 35°C (Figure 2)

In example 7 different Sulfate sources are investigated. In mixtures Q and R a calcined gypsum is used. The gypsum in this example is dehydrated at 120°C. The background is to simulate a process in an industrial cement ball mill, where due to the heat in the mill dehydration occurs. As it can be seen calcined gypsum does not negatively impact on backfill properties. On the contrary, in comparison to mixtures O and P, the use of calcined gypsum instead of gypsum improves the mechanical strengths.

## Claims

1. A method for backfilling in underground and surface mining **characterised in that** Tailings are mixed with a binder wherein the binder comprises at least granulated blast furnace slag, Portland cement clinker and calcium sulfate wherein the amount of portland cement clinker ranges from 5 m.-% to 12m.-% and the amount of calcium sulfate ranges from 5 m.-% to 15 m.-% the rest being ground granulated blast furnace slag.

2. The method of claim 1, wherein Calcium sulfate is used which contains one, more or all from the following group: gypsum, calcium sulfate dihydrate (CaSO₄ · 2H₂O), hemihydrate (CaSO₄ . ½ H₂O), anhydrite (anhydrous calcium sulfate, CaSO₄) in any admixture .

3. The method of claim 1 or 2, wherein the constituents of the binder are used in a ground form wherein they are ground separately or ground together.

4. The method of any of the preceding claims wherein the combined Blaine fineness of the binder is not below 2500 g/m2 and preferentially not below 3500 g/m2.

5. The method of any of the preceding claims wherein the Portland cement clinker can be any Portland cement clinker or any Portland cement, which is a ready ground material which is made from Portland cement clinker and additives wherein in case portland cement is used any strength class from 32.5, 42.5 and 52.5 can be used.

6. The method of any of the preceding claims wherein gangue is added.

7. The method of any of the preceding claims wherein the pulp density (solid fraction/total backfill material) is adjusted to 55 to 82%.

8. The method of any of the preceding claims wherein 1 m.-% to 14 m.-% of the binder are mixed with tailings or tailings and other solid aggregates like gangue, sand, rock.

9. The method of any of the preceding claims wherein the binder or the backfilling material is mixed with further additives from the following group: setting retardants, setting accelerators, plasticizers.

10. A binder for the binding of backfilling material in underground mining the binder comprising portland cement clinker from 5 m.-% to 12m.-% and calcium sulfate from 5 m.-% to 15 m.-% the rest being ground granulated blast furnace slag in an amount of 73 m.-% to 90 m.-% and other constituents.

11. The binder of claim 10 wherein the binder comprises further additives from the following group: setting retardants, setting accelerators, plasticizers.

12. The binder of claim 10 or 11, wherein the binder has a fineness of at least 2500 g/m2 Blaine.

13. The binder of claim 10 or 11, wherein the binder has a fineness of at least 3500 g/m2 Blaine.

14. The binder of claims 10 to 13, wherein the Portland cement clinker can be any Portland cement clinker or any ready ground Portland cement which is made from Portland cement clinker and additives wherein in case portland cement is used any strength class from 32.5, 42.5 and 52.5 or any mixture thereof is used.

15. The binder of claims 10 to 14, wherein the Calcium sulfate contains one, more or all from the following group: gypsum, calcium sulfate dihydrate (CaSO₄ · 2H₂O), hemihydrate (CaSO₄ . ½ H₂O), anhydrite (anhydrous calcium sulfate, CaSO₄) in any admixture .

16. The use of the binder of claims 10 to 15 for binding backfilling material in underground and surface mining.
